(19) **Europäisches Patentamt**
**European Patent Office**
**Office européen des brevets**

(11) **EP 2 899 226 B1**

(12) **EUROPEAN PATENT SPECIFICATION**

(45) Date of publication and mention
of the grant of the patent:
**10.05.2017 Bulletin 2017/19**

(21) Application number: **14767734.8**

(22) Date of filing: **19.03.2014**

(51) Int Cl.:
*C08J 5/14* (2006.01)          *B32B 37/00* (2006.01)
*C08G 18/06* (2006.01)          *C08L 75/04* (2006.01)

(86) International application number:
**PCT/KR2014/002309**

(87) International publication number:
**WO 2014/148816 (25.09.2014 Gazette 2014/39)**

(54) **METHOD FOR PREPARING POLYURETHANE SUPPORT PAD**

VERFAHREN ZUR HERSTELLUNG EINES POLYURETHANSTÜTZKISSENS

PROCÉDÉ DE PRÉPARATION D'UN TAMPON DE SUPPORT EN POLYURÉTHANNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2013 KR 20130029176**

(43) Date of publication of application:
**29.07.2015 Bulletin 2015/31**

(73) Proprietor: **LG Chem, Ltd.
Seoul 150-721 (KR)**

(72) Inventors:
• **SHIN, Dong-Mok
Daejeon 305-738 (KR)**
• **KIM, Na-Ri
Daejeon 305-738 (KR)**
• **AHN, Byeong-In
Daejeon 305-738 (KR)**
• **CHOI, Sang-Soon
Daejeon 305-738 (KR)**

• **TAE, Young-Ji
Daejeon 305-738 (KR)**
• **YOON, Keong-Yeon
Daejeon 305-738 (KR)**
• **SIN, Chang-Hoon
Daejeon 305-738 (KR)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
KR-A- 20060 094 063    KR-A- 20120 073 200
KR-A- 20120 109 994    KR-A- 20130 009 673
KR-A- 20130 009 687    KR-A- 20130 009 687
KR-A- 20130 020 633    KR-A- 20130 020 633

**Description**

[TECHNICAL FIELD]

The present invention relates to a preparation method of a polyurethane mounting pad, and more particularly, to a preparation method of a polyurethane mounting pad, in which the pad has long and large pores uniformly formed therein, and has low hardness, excellent compressibility, and high elastic modulus, and thus more uniform and highly efficient polishing can be achieved.

[BACKGROUND OF ART]

Since a fine and precise surface is required for a substrate that is used for a semiconductor device or a display device requiring a high degree of integration, various planarization methods are applied. Particularly, due to the trend of high integration and high performance of the semiconductor device or display device, a polishing method of relatively moving a polishing pad and a subject to be polished, while supplying a slurry composition including polishing particles and various chemical components between the polishing pad and the subject to be polished, is generally used. In this polishing method, for more precise polishing, the subject to be polished is fixed on a mounting pad so as to maintain a constant location and position during the polishing or processing process.

In particular, to be used as a glass substrate for a display device, roughness and total thickness variation (TTV) of the glass substrate surface become major management factors, and it must be controlled within the range from submicron to a few tens of microns. Further, waviness must be controlled in the range of 40 nm. In particular, to apply the glass substrate to TFT, it is necessary to control waviness in the range of about 20 nm.

For such precise polishing, it is necessary to control the polishing conditions and the polishing apparatus, and a mounting pad to be used must have high compressibility and compression recovery rate, and the entire area of the mounting pad must have more uniform thickness, pressure distribution and tension distribution.

However, since a previous mounting pad exhibits non-uniform size and distribution of internal pores, physical properties such as compressibility and compression recovery rate are poor, and thus its application in the fields requiring more uniform and precise polishing, for example, in the polishing process of a glass substrate for a display device was unsatisfactory.

KR20130020633A discloses a PUR mounting pad being prepared from 30 weight percent DMF solution of a PUR with a viscosity of 500,000 cps.

KR20130009687A discloses a PUR mounting pad being prepared from a DMF solution of a PUR.

Accordingly, there is a need to develop a preparation method of a polyurethane mounting pad, in which the internal pores of the pad have uniform and regular shape, and physical properties such as compressibility and compression recovery rate are improved, and thus more uniform and highly efficient polishing can be achieved.

[DETAILED DESCRIPTION OF THE INVENTION]

[Technical Problem]

An object of the present invention is to provide a preparation method of a polyurethane mounting pad, which is used to prepare a pad having long and large internal pores uniformly formed, to make the pad exhibit low hardness, excellent compressibility or the like, and to achieve more uniform and highly efficient polishing.

Preferred embodiments are disclosed in the subclaims.

[Technical Solution]

The present invention provides a preparation method of a polyurethane mounting pad, including the steps of wet-coagulating a resin composition including a polyurethane resin having a weight average molecular weight of 220,000 to 1,000,000 and a DMF solvent; and immersing the wet-coagulated material in an immersion solution at 40 to 90°C.

Provided is also a polyurethane mounting pad which includes internal pores having the longest diameter of 50 $\mu$m to 2 mm and an aspect ratio of 3 to 10, and has a weight average molecular weight of 50,000 to 150,000.

Hereinafter, a preparation method of a polyurethane mounting pad according to specific embodiments of the present invention and a polyurethane mounting pad will be described in more detail.

As used herein, the term 'mounting pad' refers to a pad that functions to attach or fix a film to be polished to a carrier in a polishing process during a manufacturing process of a substrate used in a semiconductor or a display device.

According to one embodiment of the present invention, provided is a preparation method of a polyurethane mounting pad, including the steps of wet-coagulating a resin composition including a polyurethane resin having a weight average molecular weight of 220,000 to 1,000,000 and a DMF solvent; and immersing the wet-coagulated material in an immersion solution at 40 to 90°C.

In order to easily form long oval-shaped internal pores in the conventional polyurethane mounting pad, a polyurethane resin having a high molecular weight has been used during the preparation of the mounting pad. The use of the polyurethane resin having a high molecular weight in the preparation of the mounting pad is rather advantageous in terms of pore formation, but has limitations that hardness of the prepared mounting pad is greatly increased, and compressibility or compression recovery rate applicable to commercial products is not secured.

Further, there has been an attempt to increase impact absorption performance in the polishing process by reducing hardness of the mounting pad. In these previous methods, however, low-molecular weight polyurethane resins or other additives are merely used. Thus, they have limitations that mechanical properties of the mounting pad prepared are insufficient or internal pores are not sufficiently formed in the mounting pad.

Accordingly, the present inventors have conducted studies on the preparation of the polyurethane mounting pad, and they found that when a polyurethane resin composition is wet-coagulated, long oval-shaped internal pores can be uniformly formed, and when the resulting product of the wet-coagulation step is immersed in an immersion solution at a particular temperature, the weight average molecular weight and density of the polyurethane mounting pad finally prepared can be reduced while maintaining the shape of the pores, thereby completing the present invention.

The polyurethane mounting pad finally prepared according to the preparation method of one embodiment of the present invention has lower density, hardness and weight average molecular weight while maintaining the shape or the external form of the pores which are formed by wet-coagulating the polyurethane resin having a molecular weight above a predetermined level, and therefore, physical properties as a mounting pad can be more easily secured.

That is, the polyurethane mounting pad may uniformly include pores, which are hardly included in a polyurethane resin having a weight average molecular weight equivalent to that of the polyurethane mounting pad, for example, long oval-shaped internal pores having a high aspect ratio. Further, the mounting pad may have lower density and hardness than the polyurethane resin obtained by the typical method previously known, thereby achieving higher compressibility, compression recovery rate or the like.

Therefore, many long oval-shaped internal pores are uniformly distributed in the polyurethane mounting pad provided according to one embodiment of the present invention, and air trapped between the mounting pad and a subject to be polished can be easily delivered inside, and a force applied during the polishing step can be uniformly dispersed over the whole area of the mounting pad and the subject to be polished, thereby achieving more uniform and precise polishing. That is, the polyurethane mounting pad may have higher compressibility and compression recovery rate and excellent mounting performance.

The polyurethane resin may have a weight average molecular weight of 220,000 to 1,000,000, and preferably a weight average molecular weight ranging from 300,000 to 500,000. If a polyurethane resin having a weight average molecular weight less than 220,000 is used to prepare the mounting pad, internal pores are not uniformly formed in the mounting pad, or the pores do have the long oval shape, and therefore, compressibility or compression recovery rate can be reduced. If a polyurethane resin having a weight average molecular weight more than 1,000,000 is used, processibility in the blending and coating steps becomes poor due to high viscosity of the polyurethane resin, and much time is required to reduce the molecular weight of the resin to a desired range during the immersion step.

After the resin composition including the polyurethane resin having a weight average molecular weight of 220,000 to 1,000,000 and the DMF solvent is subjected to wet-coagulation, the step of immersing the wet-coagulated material in an immersion solution at 40 to 90°C can be carried out.

As described above, the internal pores formed in the wet-coagulated material of the polyurethane resin composition maintain their shape during the immersion step, and hydrolysis or trans-esterification of urethane bonds or ester bonds in the polyurethane resin occurs in the immersion solution during the immersion step, thereby reducing the weight average molecular weight and the density of the polyurethane mounting pad finally obtained.

The immersion solution of the immersion step may include water, a glycerin aqueous solution, an alcohol aqueous solution or a mixture thereof. As the water, general water may be used without limitation, and it is possible to use distilled water, ultra pure water or the like. In addition, the glycerin aqueous solution means an aqueous solution containing glycerin, which can be used without limitation in the glycerin concentration. Preferably, 0.1 to 50% glycerin aqueous solution may be used. Specific example of the alcohol aqueous solution may include ethanol, an IPA aqueous solution or the like. If the alcohol concentration is high, swelling of the pad surface may occur. Thus, the alcohol concentration is preferably 10% or less.

In particular, since hydrolysis of the polyurethane resin may easily occur in water or glycerin aqueous solution, the immersion solution containing water or the glycerin aqueous solution may be more preferably used in the preparation method of the polyurethane mounting pad of one embodiment.

The immersion step may be carried out at a temperature of 40 to 90°C, and preferably at a temperature of 50°C to 80°C. If the immersion step is carried out at an excessively low temperature, it is difficult to reduce the molecular weight within the range for achieving high compressibility, and thus it is difficult to prepare a polyurethane mounting pad having uniform pressure distribution or tension distribution. Consequently, the resulting polyurethane mounting pad may cause non-uniform polishing or produce defective products. Further, if the immersion step is carried out at an excessively high temperature, deformation of the polyurethane resin layer may occur, and volatilization or deformation of an adhesive layer to be further used may occur.

The immersion step may be carried out for 1 hour to 4 weeks, and preferably for 1 day to 3 weeks. If the immersion step is carried out for less than 1 hour, it is difficult to sufficiently reduce the molecular weight. If the immersion step is carried out for more than 4 weeks, physical properties of the mounting pad may deteriorate.

After the immersion step, the polyurethane resin may have 10 to 80% reduction in the weight average molecular weight. The reduction in the weight average molecular weight of the polyurethane resin increases over the immersion time, and the polyurethane resin may have 65 to 80% reduction in the weight average molecular weight when immersed for 3 weeks or longer. As described above, during the immersion step, while the pores maintain the shape and size, the coagulated product of the polyurethane resin composition has a reduced weight average molecular weight to reduce the density of the final mounting pad, which has excellent mounting performances such as high compressibility, compression recovery rate or the like.

Further, after the immersion step, the glass transition temperature, as measured by DMA, of the polyurethane resin may be reduced to 5 to 50°C, and preferably 10 to 40°C. As the immersion step is carried out, the glass transition temperature of the polyurethane resin is reduced, thereby achieving higher compressibility and compression recovery rate than those of the polyurethane resin obtained by the typical method previously known.

Meanwhile, the polyurethane mounting pad prepared by the preparation method of one embodiment may be different from other typical polyurethane sheet, for example, a polyurethane polishing pad, a polyurethane synthetic leather or the like. Specifically, the polyurethane polishing pad must have high abrasion resistance and high hardness, and be prepared by using a crosslinked polyurethane resin. In addition, the polyurethane polishing pad must be prepared not by wet-coagulation, but by a general method of in situ mixing prepolymers and other monomers and reacting and curing the mixture in a mold.

The preparation method of the polyurethane mounting pad may further include the steps of washing and drying the wet-coagulated material; and polishing the surface of the wet-coagulated material; or forming an adhesive layer on the surface of the wet-coagulated material, in addition to the steps of wet-coagulating the resin composition including the polyurethane resin having a weight average molecular weight of 220,000 to 1,000,000 and the DMF solvent; and immersing the wet-coagulated material in the immersion solution at 40 to 90°C.

If the composition including the polyurethane resin and the organic solvent such as DMF solvent is coagulated in a coagulation bath containing an organic solvent and water, phase separation of the components of the resin composition, for example, phase separation of the polyurethane resin, water, and the organic solvent occurs, thereby obtaining a polyurethane resin including a plurality of pores formed therein.

The step of wet-coagulating the resin composition including the polyurethane resin and the DMF solvent may include the steps of forming the polyurethane resin composition; applying or introducing the polyurethane resin composition on a predetermined substrate or mold to form a coating layer; and coagulating the coating layer.

After the step of wet-coagulating the resin composition including the polyurethane resin and the DMF solvent, the steps of washing, dehydrating, and drying the coagulated material of the composition may be sequentially performed. In the step of washing the coagulated material, the organic solvent such as DMF solvent or additives may be removed, and the method and device known to be used in the preparation method of the mounting pad may be used without limitations. As such, the organic solvent and other additive are removed by washing the coagulation solution on the surface of the resin composition, and the resin composition is immersed in the immersion solution at 40 to 90°C so as to easily reduce the weight average molecular weight of the polyurethane resin without deformation of the shape of the pores previously formed.

The step of coagulating the coating layer may be conducted by introducing the substrate or mold on which the coating layer is formed into a coagulation bath filled with a dimethylformamide aqueous solution or water. In the coagulation process, dimethylformamide in the polyurethane resin is replaced with water and the polyurethane resin is slowly coagulated, and thereby forming a plurality of pores. The concentration of the aqueous solution and the amount of the aqueous solution or water filled in the coagulation bath are not particularly limited, and can be properly controlled according to the reaction conditions and physical properties of the mounting pad to be prepared. After the coagulation process, water and the DMF solvent may remain in the polishing pad, and the coagulated material may be washed and dried in an oven to remove the water, the DMF solvent, and other components in the polishing pad.

Meanwhile, the preparation method of the polyurethane mounting pad may include the step of polishing (or buffing) the surface of the wet-coagulated material. The polishing step is a process of polishing the surface of a polyurethane film (100% modulus of 1 to 10) having low hardness using a roll of sandpaper rotating at a high speed, and high energy is applied to this process.

In the polishing (or buffing) process, the subject to be polished may be polished to several hundreds of micrometers at once or several tens of micrometers several times. If a film having low hardness is highly polished at once, a difference in the thickness or the polishing (buffing) degree may occur in the machine direction (MD), and energy non-uniformly accumulated in the mounting pad is non-uniformly delivered from the polishing apparatus to the subject to be polished, for example, a glass substrate of a display device so as to generate lines in the transverse direction (TD) or stripes.

The preparation method of the polyurethane mounting pad may further include the step of forming an adhesive layer on the surface of the buffed wet-coagulated material. The adhesive layer may be formed by the method known to be used in the preparation of the final product of the mounting pad without limitation in its constitution. For example, the adhesive layer may be formed by applying a predetermined adhesive, for example, a pressure-sensitive adhesive (PSA), etc. to the surface of the wet-coagulated material or to the surface of the surface-polished wet-coagulated material, or formed by laminating a pressure-sensitive adhesive film on the surface of the wet-coagulated material or on the surface of the surface-polished wet-coagulated material.

Meanwhile, the immersion step may be carried out without being limited to the process sequence. For example, the immersion step may be carried out after the step of wet-coagulating the polyurethane resin composition, the step of washing the wet-coagulated material of the polyurethane resin composition, the step of polishing the surface, or the step of forming the adhesive layer, but the wet-coagulated resin composition is preferably washed and immersed in order to reduce the weight average molecular weight of the polyurethane resin without deformation of the shape of the pores previously formed.

The resin composition may include the polyurethane resin in an amount of 1 to 30 wt%, and preferably 5 to 25 wt%. If the content of the polyurethane resin in the resin composition is too low, it may be difficult to appropriately form a mounting pad body and the viscosity of the composition may become too low, and thus it may not be easy to apply the composition to a coating process for preparing the mounting pad. If the content of the polyurethane resin in the resin composition is too high, density of the obtained polyurethane mounting pad may become higher than needed or the viscosity of the composition may become too high, and thus it may not be easy to apply the composition to the coating process for preparing the mounting pad.

The resin composition may include a dimethylformamide (DMF) solvent, and dimethylformamide (DMF) refers to N,N'-dimethylmethanamide. If the polyurethane resin composition is coagulated, phase separation of the ingredients of the resin composition, for example, phase separation of polyurethane resin, water, and the DMF solvent occurs, thereby forming a polyurethane mounting pad including pores formed therein. That is, the DMF solvent existing in the polyurethane resin is replaced with water in a coagulation bath during a coagulation process of the resin composition, and if the coagulation process is completed, a polyurethane resin for the mounting pad including pores formed therein is formed.

The resin composition may include the DMF solvent in an amount of 50 to 90 wt%, and preferably 50 to 85 wt%. If the content of the DMF solvent in the resin composition is too low, formation of internal pores in the resin may not smoothly occur during a coagulation process, and if the content is too high, the ratio of the polyurethane resin may be largely decreased, and thus it may be difficult to prepare a polyurethane mounting pad having appropriate physical properties.

The resin composition may further include an anionic surfactant. The anionic surfactant may increase penetration of water throughout the composition to be coagulated and may prevent non-uniform phase separation of each ingredient of the polyurethane resin composition to allow uniform formation of internal pores in the mounting pad. The content of the anionic surfactant may be property controlled, considering physical properties of the mounting pad to be prepared or the process conditions, and for example, it may be included in an amount of 0.01 to 5 wt%, based on the polyurethane resin composition for the mounting pad. Examples of the anionic surfactant may include dodecylbenzenesulfonic acid, dodecylbenzenesulfonic acid derivatives, succinic acid, succinic acid derivatives, dodecylsulfate, dodecylsulfate derivatives, and mixtures of one or more thereof. A mixture of dodecylbenzenesulfonic acid or a derivative thereof and succinic acid or a derivative thereof is preferably used as the anionic surfactant to properly control the shape or size of the internal pores formed in the mounting pad and to improve physical properties of the mounting pad to be prepared.

The resin composition may further include a nonionic surfactant in order to increase adsorption of the mounting pad or to planarize the surface of the pad. Examples of the nonionic surfactant may include a silicon-based polymer, silicon oil, a glycerol-based polymer, a hydrocarbon-based polymer or the like. The content of the nonionic surfactant may be appropriately controlled, considering the physical properties of the mounting pad to be prepared or the process conditions. For example, it may be included in an amount of 0.01 to 5 wt% in the polyurethane resin composition for the mounting pad.

Further, the resin composition may further include one or more additives selected from the group consisting of a colorant, a water repellent, a filler, a pore size controller, and a pigment. The content of the additives may be appropriately controlled considering the physical properties of the mounting pad to be prepared or the process conditions. For example, each additive may be included in an amount of 0.01 to 10 wt% in the resin composition.

Meanwhile, according to another embodiment of the invention, provided is a polyurethane mounting pad which includes internal pores having the longest diameter of 50 $\mu$m to 2 mm and an aspect ratio of 3 to 10, and has a weight average molecular weight of 50,000 to 200,000. Preferably, the longest diameter may be 300 μm to 2 mm, an aspect ratio may be 4 to 9, and a weight average molecular weight may be 50,000 to 150,000.

The polyurethane mounting pad may have compressibility of 40% or more, or 50 to 70%, as measured according to JIS L1021-16.

Further, the polyurethane mounting pad may have a glass transition temperature of -50 to -10°C and 10 to 50°C.

Meanwhile, the polyurethane mounting pad may be obtained by immersing the wet-coagulated material of the polyurethane resin composition including the polyurethane resin having a weight average molecular weight of 220,000 to 1,000,000 and the DMF solvent in the immersion solution at 40 to 90°C. Through this immersion process, the polyurethane resin composition may have 10 to 80% reduction in the weight average molecular weight of 220,000 to 1,000,000.

If a polyurethane resin having a weight average molecular weight of 50,000 to 200,000 is used in order to reduce the molecular weight of the final mounting pad, it is difficult to uniformly form long oval-shaped internal pores, and thus it is difficult to include internal pores having the longest diameter of 50 μm to 2 mm and an aspect ratio of 3 to 10. In addition, it is difficult to achieve compressibility of 40% or more, as measured according to JIS L1021-16. However, as described above, when the polyurethane resin composition including the polyurethane resin of 220,000 to 1,000,000 and the DMF solvent is wet-coagulated and the wet-coagulated material is immersed in an aqueous solution within a predetermined temperature range, the molecular weight is decreased to prepare the mounting pad having the above characteristics.

The polyurethane mounting pad includes long and large internal pores uniformly formed therein and has low weight average molecular weight, and thus exhibits high compressibility, compression recovery rate, and elastic modulus and sufficiently absorbs non-uniform impact applied during polishing, thereby achieving uniform and precise polishing.

[ADVANTAGEOUS EFFECTS]

According to the present invention, provided is a preparation method of a polyurethane mounting pad, which is capable of minimizing defective products generated during the production process, and making the prepared pad exhibit more uniform thickness, pressure distribution or tension distribution throughout the whole area thereof, and achieving more uniform and precise polishing.

[BRIEF DESCRIPTION OF DRAWINGS]

FIG. 1 is a cross-sectional SEM image of the mounting pad prepared in Example 1;
FIG. 2 is a cross-sectional SEM image of the mounting pad prepared in Comparative Example 2;
FIG. 3 is a cross-sectional SEM image of the mounting pad prepared in Comparative Example 3;
FIG. 4 is a cross-sectional SEM image of the mounting pad prepared in Comparative Example 3;
FIG. 5 is a graph showing DMA measurement of the mounting pad prepared in Comparative Example 3; and
FIG. 6 is a graph showing DMA measurement of the mounting pad prepared in Example 1.

[DETAILED DESCRIPTION OF THE EMBODIMENTS]

Hereinafter, the present invention will be explained in more detail with reference to the following Examples. However, these examples are only to illustrate the invention, and the scope of the invention is not limited thereto.

<Examples and Comparative Examples: Preparation of polyurethane mounting pad and Measurement of compressibility thereof>

<Example 1>

A resin composition including the ingredients of the following Table 1 was coated on a PET film, and then the coating layer was wet-coagulated, washed, dehydrated, and dried to obtain a polyurethane resin film layer having internal pores formed therein. The obtained polyurethane resin film layer was subjected to buffing treatment using a roll of sandpaper rotating at a high speed to have more uniform thickness and high uniformity, and a pressure-sensitive adhesive double coated tape was laminated on one side of the buffed polyurethane resin film layer to obtain a polyurethane mounting pad.

The mounting pad was immersed in water at 50°C for the time of the following Table 2 and dried in an oven to prepare a final polyurethane mounting pad.

[Polyurethane layer: 1200 μm. Adhesive layer: 250 μm]

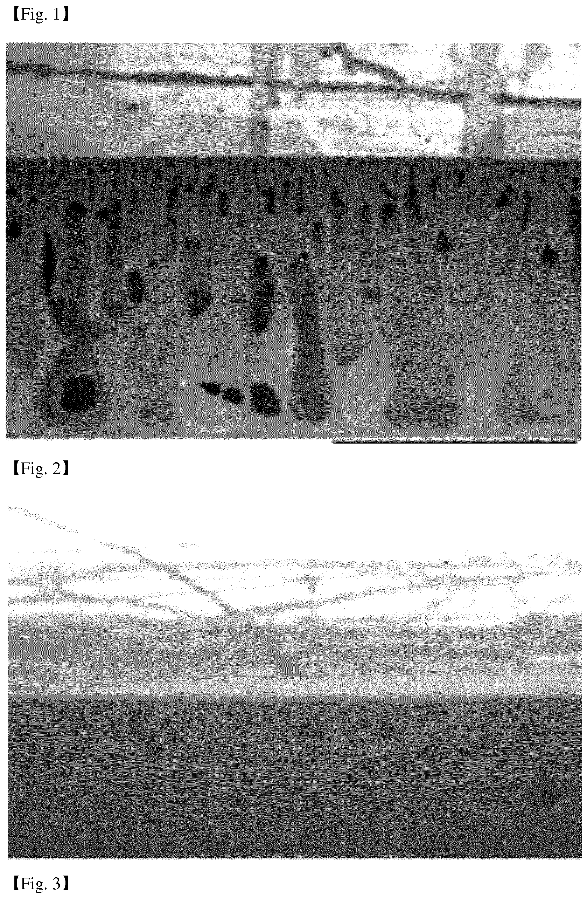

Compressibility and final weight average molecular weight of the polyurethane mounting pad thus prepared according to the immersion time are shown in Table 2, and a cross-sectional SEM image of the mounting pad is shown in FIG. 1.

[Table 1]

| Name of ingredient (part by weight) | Polyurethane resin (SW-80LM) 380,000 | Nonionic surfactant SD-7 | SD-11 | Colorant | DMF | Water repellent | Filler | EG |
|---|---|---|---|---|---|---|---|---|
| Example 1 | 150 | 2 | 4 | 6 | 15 | 2 | 1 | 2 |
| * Polyurethane resin SW-80LM: 20wt% DMF solution in polyurethane resin | | | | | | | | |

**<Example 2>**

A polyurethane mounting pad was obtained in the same manner as in Example 1, except that the pad was immersed in a 5% glycerin aqueous solution at 50°C, instead of water at 50°C.

[Polyurethane layer: 1200 μm, Adhesive layer: 250 μm]

Compressibility and final weight average molecular weight of the polyurethane mounting pad thus prepared according to the immersion time are shown in Table 2.

**<Comparative Example 1>**

A polyurethane mounting pad was obtained in the same manner as in Example 1, except that aging of the pad was carried out in an oven at 50°C for the time of Table 2, instead of the immersion process.

[Polyurethane layer: 1200 μm, Adhesive layer: 250 μm]

Compressibility and final weight average molecular weight of the polyurethane mounting pad thus prepared according to the immersion time are shown in Table 2.

**<Comparative Example 2>**

A polyurethane mounting pad was obtained in the same manner as in Example 1, except that a polyurethane resin having a molecular weight of 210,000 was used without the immersion process.

[Polyurethane layer: 600 μm, Adhesive layer: 250 μm]

Compressibility and final weight average molecular weight of the polyurethane mounting pad thus prepared according to the immersion time are shown in Table 2, and a cross-sectional SEM image of the mounting pad is shown in FIG. 2.

**<Comparative Example 3>**

A polyurethane mounting pad was obtained in the same manner as in Example 1, except that no immersion process was carried out.
Compressibility and final weight average molecular weight of the polyurethane mounting pad thus prepared according to the immersion time are shown in Table 2, and a cross-sectional SEM image of the mounting pad is shown in FIG. 3.

**<Comparative Example 4>**

A polyurethane mounting pad was obtained in the same manner as in Example 1, except that the immersion process was carried out at a low temperature of less than 40°C.

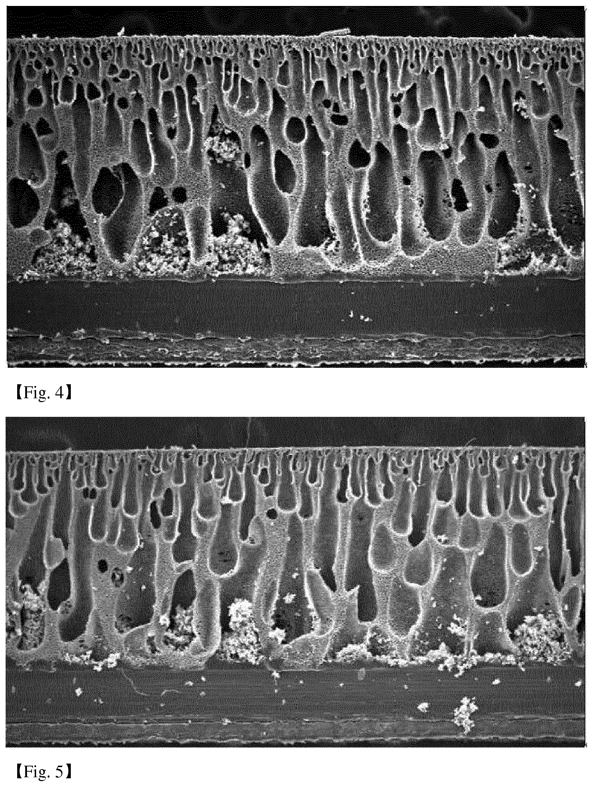

Compressibility and final weight average molecular weight of the polyurethane mounting pad thus prepared according to the immersion time are shown in Table 2, and a cross-sectional SEM image of the mounting pad is shown in FIG. 4.

[Table 2]

| | Immersion time | Weight average molecular weight | Compressibility (%) |
|---|---|---|---|
| Example 1 | 1 day | 290,000 | 49 |
| | 1 week | 232,000 | 51 |
| | 2 weeks | 160,000 | 53 |
| | 3 weeks | 119,000 | 56 |
| Example 2 | 1 day | 287,000 | 50 |
| | 1 week | 210,000 | 52 |
| | 2 weeks | 143,000 | 54 |
| | 3 weeks | 92,000 | 57 |
| Comparative Example 1 | 0 day | 318,000 | 47 |
| | 1 day | 318,000 | 49 |
| | 1 week | 315,000 | 48 |
| | 2 weeks | 313,000 | 48 |
| | 3 weeks | 313,000 | 49 |
| Comparative Example 2 | 0 day | 210,000 | 12 |
| Comparative Example 3 | 0 day | 318,000 | 47 |
| Comparative Example 4 | 1 week | 318,000 | 48 |

## * Measurement of compressibility

Compressibility of the polyurethane mounting pads obtained in Examples and Comparative Examples was measured according to JIS L1021-16. In detail, the polyurethane mounting pads obtained in Examples and Comparative Examples were cut to prepare each sample with a size of 25 mm*30 mm. An initial load of 100 g/cm$^2$ was applied to the sample for 30 seconds, and then the initial thickness was measured using a dial gauge (TO). A load of 1120 g/cm$^2$ was then applied to the sample for 5 minutes, and then the thickness was measured under pressure (T1). Each measured thickness was applied to the following formula to calculate compressibility.

$$\text{Compressibility (\%)} = (TO-T1)*100/T0$$

## <Comparison of Examples and Comparative Examples>

As shown in the results of Comparative Examples 1 and 3 at 0 day of Table 2, the polyurethane mounting pads of Examples 1 and 2 and Comparative Examples 1 and 3, which were prepared by wet-coagulating, washing, dehydrating, drying and buffing the polyurethane resin compositions and by forming an adhesive layer thereon before the immersion process, had a molecular weight of 318,000.

In Examples 1 and 2, the polyurethane mounting pads having a molecular weight of 318,000 was subjected to immersion to produce final polyurethane mounting pads. In Comparative Example 1, the polyurethane mounting pad was aged in an oven at the same temperature as the immersion step instead of the immersion process to produce the final polyurethane mounting pad. In Comparative Example 3, the immersion process was omitted. In Comparative Example 4, the polyurethane mounting pad was immersed at a low temperature less than 40°C to produce a polyurethane mounting pad.

Through each process, the mounting pads of Examples 1 and 2 were found to have a weight average molecular weight of 119,000 and 92,000, respectively, indicating that the molecular weight can be sufficiently reduced by the immersion process. In addition, the compressibility was as high as 56% and 57%, respectively, suggesting that a glass substrate as a subject to be polished can be polished uniformly, efficiently and precisely during the practical polishing process.

In contrast, the mounting pads of Comparative Example 1 and Comparative Example 3 showed a small change in their molecular weight and also compressibility less than 50%. From the results of Comparative Examples, the effects of the immersion process on compressibility improvement and molecular weight reduction can be confirmed. That is, when the immersion process is omitted or aging was carried out at the same temperature as in Example without immersion, there were no great changes in the molecular weight and compressibility. Therefore, it can be seen that the reduced molecular weight and the increased compressibility are attributed not to high temperature or time, but to the immersion process.

Meanwhile, in Comparative Example 2, a polyurethane resin having a low molecular weight of 210,000 was used as a starting material to produce a mounting pad, and no immersion process was carried out. Therefore, the molecular weight was not further decreased, but the molecular weight of the starting material was equivalent to that of the final polyurethane resin of Example, thereby exhibiting density and hardness being equivalent thereto. However, the mounting pad of Example showed remarkably high compressibility and compression recovery rate, compared to that of Comparative Example 2, suggesting that internal pores are sufficiently formed in the mounting pad by the preparation method of Example and they showed uniform shape and distribution, and therefore, the above effects can be achieved.

Further, the results of changes in the molecular weight and compressibility of Comparative Example 4, in which the immersion process was carried out at a low temperature, suggest that the immersion at an excessively low temperature cannot reduce the molecular weight to the range sufficient for high compressibility.

Furthermore, as shown in FIGs. 1 and 2, the polyurethane mounting pad of Example 1 prepared by using polyurethane having a high molecular weight showed a cross-sectional view of including long pores uniformly distributed, indicating formation of remarkably improved pore shape, compared to the cross-sectional view of the Comparative Example 2 prepared by using polyurethane having a low molecular weight.

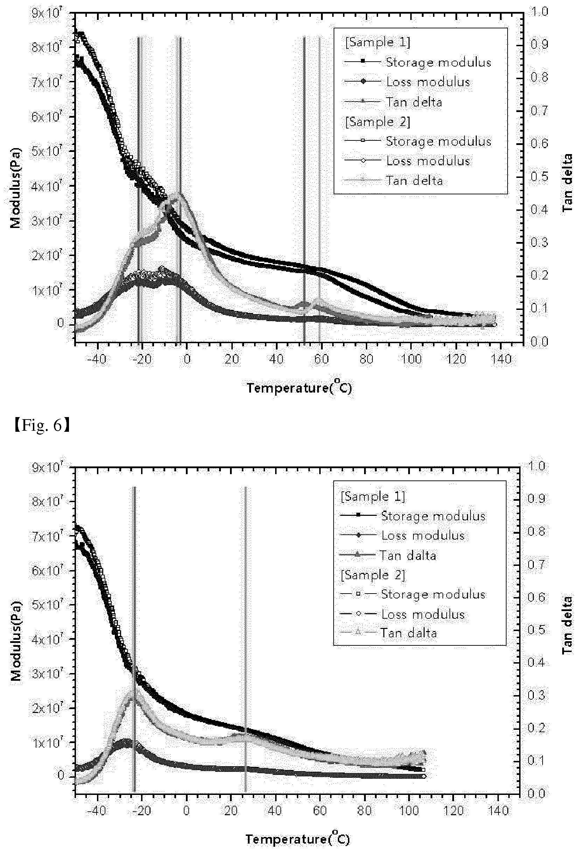

As shown in the DMA measurement graphs of FIGs. 5 and 6, the mounting pad of Comparative Example 3 prepared without the immersion process showed a glass transition temperature at around 0°C and 60°C, but the mounting pad of Example 1 prepared by the immersion process showed a glass transition temperature at around - 20°C and 30°C, indicating that the glass transition temperature is decreased by the immersion process.

**Claims**

1.  A preparation method of a polyurethane mounting pad, comprising the steps of:

    wet-coagulating a resin composition including a polyurethane resin having a weight average molecular weight of 220,000 to 1,000,000 and a DMF solvent; and
    immersing the wet-coagulated material in an immersion solution at 40 to 90°C.

2.  The preparation method according to claim 1, wherein the immersion solution includes one or more selected from the group consisting of water, a glycerin aqueous solution, and an alcohol aqueous solution.

3.  The preparation method according to claim 1, wherein the polyurethane resin has a weight average molecular weight of 300,000 to 500,000.

4.  The preparation method according to claim 1, wherein the wet-coagulated material is immersed for 1 hour to 4 weeks.

5.  The preparation method according to claim 1, wherein the polyurethane resin has 10 to 80% reduction in the weight average molecular weight, after the immersion step.

6.  The preparation method according to claim 1, wherein the glass transition temperature, as measured by DMA, of the polyurethane resin is reduced to 5 to 50°C, after the immersion step.

7.  The preparation method according to claim 1, further comprising the step of washing the wet-coagulated material of the resin composition, after the step of wet-coagulating the resin composition.

8.  The preparation method according to claim 1, further comprising the step of polishing the surface of the wet-coagulated material; or the step of forming an adhesive layer on the surface of the wet-coagulated material.

9. The preparation method according to claim 1, wherein the polyurethane resin has a viscosity of 10,000 to 1,000,000 mPas (10,000 to 1,000,000 cps) in 30% DMF Solution at room temperature.

10. The preparation method according to claim 1, wherein the resin composition further includes one or more surfactants selected from the group consisting of an anionic surfactant and a nonionic surfactant.

11. The preparation method according to claim 10, wherein the anionic surfactant includes one or more compounds selected from the group consisting of dodecylbenzenesulfonic acid, dodecylbenzenesulfonic acid derivatives, succinic acid, succinic acid derivatives, dodecylsulfate, and dodecylsulfate derivatives.

12. The preparation method according to claim 10, wherein the anionic surfactant includes a mixture of dodecylbenzenesulfonic acid or a derivative thereof; and succinic acid or a derivative thereof.

13. The preparation method according to claim 10, wherein the nonionic surfactant includes one or more compounds selected from the group consisting of a silicon-based polymer, silicon oil, a glycerol-based polymer, and a hydrocarbon-based polymer.

14. The preparation method according to claim 10, wherein the resin composition includes 1 to 30 wt% of the polyurethane resin; 50 to 90wt% of the DMF solvent; and the residual amount of one or more surfactants selected from the group consisting of the anionic surfactant and the nonionic surfactant.

**Patentansprüche**

1. Herstellungsverfahren eines Polyurethanhalterungskissens, umfassend die Schritte:

   Nass-Koagulieren einer Harzzusammensetzung einschließend ein Polyurethanharz mit einem Gewichtsmittelmolekulargewicht von 220.000 bis 1.000.000 und ein DMF-Lösungsmittel; und
   Eintauchen des nass-koagulierten Materials in eine Eintauchlösung bei 40 bis 90°C.

2. Herstellungsverfahren nach Anspruch 1, wobei die Eintauchlösung eines oder mehrere ausgewählt aus der Gruppe bestehend aus Wasser, einer wässrigen Glycerinlösung und einer wässrigen Alkohollösung einschließt.

3. Herstellungsverfahren nach Anspruch 1, wobei das Polyurethanharz ein Gewichtsmittelmolekulargewicht von 300.000 bis 500.000 aufweist.

4. Herstellungsverfahren nach Anspruch 1, wobei das nass-koagulierte Material für 1 Stunde bis 4 Wochen eingetaucht wird.

5. Herstellungsverfahren nach Anspruch 1, wobei das Polyurethanharz eine 10- bis 80%ige Reduktion des Gewichtsmittelmolekulargewichts nach dem Eintauchschritt aufweist.

6. Herstellungsverfahren nach Anspruch 1, wobei die Glasübergangstemperatur, gemessen durch DMA, des Polyurethanharzes auf 5 bis 50°C nach dem Eintauchschritt reduziert wird.

7. Herstellungsverfahren nach Anspruch 1, weiter umfassend den Schritt eines Waschens des nass-koagulierten Materials der Harzzusammensetzung nach dem Schritt des Nass-Koagulierens der Harzzusammensetzung.

8. Herstellungsverfahren nach Anspruch 1, weiter umfassend den Schritt eines Polierens der Oberfläche des nass-koagulierten Materials; oder den Schritt des Bildens einer Klebstoffschicht auf der Oberfläche des nass-koagulierten Materials.

9. Herstellungsverfahren nach Anspruch 1, wobei das Polyurethanharz eine Viskosität von 10.000 bis 1.000.000 mPas (10.000 bis 1.000.000 cps) in 30%iger DMF-Lösung bei Raumtemperatur aufweist.

10. Herstellungsverfahren nach Anspruch 1, wobei die Harzzusammensetzung ferner ein oder mehrere Tenside einschließt, die ausgewählt sind aus der Gruppe bestehend aus einem anionischen Tensid und einem nicht ionischen Tensid.

**11.** Herstellungsverfahren nach Anspruch 10, wobei das anionische Tensid eine oder mehrere Verbindungen einschließt, die ausgewählt sind aus der Gruppe bestehend aus Dodecylbenzolsulfonsäure, Dodecylbenzolsulfonsäurederivaten, Bernsteinsäure, Bernsteinsäurederivaten, Dodecylsulfat und Dodecylsulfatderivaten.

**12.** Herstellungsverfahren nach Anspruch 10, wobei das anionische Tensid eine Mischung aus Dodecylbenzolsulfonsäure oder einem Derivat derselben; und Bernsteinsäure oder einem Derivat derselben einschließt.

**13.** Herstellungsverfahren nach Anspruch 10, wobei das nicht ionische Tensid eine oder mehrere Verbindungen einschließt, die ausgewählt sind aus der Gruppe bestehend aus einem Polymer auf Siliziumbasis, Siliziumöl, einem Polymer auf Glycerolbasis und einem Polymer auf Kohlenwasserstoffbasis.

**14.** Herstellungsverfahren nach Anspruch 10, wobei die Harzzusammensetzung 1 bis 30 Gew.-% des Polyurethanharzes; 50 bis 90 Gew.-% des DMF-Lösungsmittels; und die restliche Menge eines oder mehrerer Tenside ausgewählt aus der Gruppe bestehend aus dem anionischen Tensid und dem nicht ionischen Tensid einschließt.


**Revendications**

**1.** Procédé de préparation d'une plage de montage en polyuréthanne comportant les étapes consistant à :

coaguler par voie humide une composition de résine comprenant une résine de polyuréthanne ayant une masse moléculaire moyenne en poids allant de 220 000 à 1 000 000 et un solvant à base de DMF ; et immerger la matière coagulée par voie humide dans une solution d'immersion à une température allant de 40 à 90°C.

**2.** Procédé de préparation selon la revendication 1, dans lequel la solution d'immersion comprend une ou plusieurs solutions sélectionnées dans le groupe constitué par de l'eau, une solution aqueuse à base de glycérine, et une solution aqueuse à base d'alcool.

**3.** Procédé de préparation selon la revendication 1, dans lequel la résine de polyuréthanne a une masse moléculaire moyenne en poids allant de 300 000 à 500 000.

**4.** Procédé de préparation selon la revendication 1, dans lequel la matière coagulée par voie humide est immergée pendant une durée allant d'une heure à quatre semaines.

**5.** Procédé de préparation selon la revendication 1, dans lequel la résine de polyuréthanne a une réduction de 10 à 80 % de la masse moléculaire moyenne en poids, après l'étape d'immersion.

**6.** Procédé de préparation selon la revendication 1, dans lequel la température de transition vitreuse, telle qu'elle est mesurée par DMA, de la résine de polyuréthanne est réduite de 5 à 50°C, après l'étape d'immersion.

**7.** Procédé de préparation selon la revendication 1, comportant par ailleurs l'étape consistant à laver la matière coagulée par voie humide de la composition de résine, après l'étape de coagulation par voie humide de la composition de résine.

**8.** Procédé de préparation selon la revendication 1, comportant par ailleurs l'étape consistant à polir la surface de la matière coagulée par voie humide ; ou l'étape consistant à former une couche adhésive sur la surface de la matière coagulée par voie humide.

**9.** Procédé de préparation selon la revendication 1, dans lequel la résine de polyuréthanne a une viscosité allant de 10 000 à 1 000 000 mPas (de 10 000 à 1 000 000 cps) dans 30 % de solution à base de DMF à température ambiante.

**10.** Procédé de préparation selon la revendication 1, dans lequel la composition de résine comprend par ailleurs un ou plusieurs agents de surface sélectionnés dans le groupe constitué par un agent de surface anionique et un agent de surface non ionique.

**11.** Procédé de préparation selon la revendication 10, dans lequel l'agent de surface anionique comprend un ou plusieurs composés sélectionnés dans le groupe constitué par de l'acide dodécylbenzènesulfonique, des dérivés d'acide dodécylbenzènesulfonique, de l'acide succinique, des dérivés d'acide succinique, du dodécylsulfate, et des dérivés de dodécylsulfate.

**12.** Procédé de préparation selon la revendication 10, dans lequel l'agent de surface anionique comprend un mélange d'acide dodécylbenzènesulfonique ou un dérivé de celui-ci ; et d'acide succinique ou un dérivé de celui-ci.

**13.** Procédé de préparation selon la revendication 10, dans lequel l'agent de surface non ionique comprend un ou plusieurs composés sélectionnés dans le groupe constitué par un polymère à base de silicone, de l'huile à base de silicone, un polymère à base de glycérol, et un polymère à base d'hydrocarbure.

**14.** Procédé de préparation selon la revendication 10, dans lequel la composition de résine comprend de 1 à 30 % en poids de résine de polyuréthanne ; de 50 à 90 % en poids de solvant à base de DMF ; et la quantité résiduelle d'un ou de plusieurs agents de surfaces sélectionnés dans le groupe constitué par l'agent de surface anionique et l'agent de surface non ionique.

【Fig. 1】

【Fig. 2】

【Fig. 3】

【Fig. 4】

【Fig. 5】

【Fig. 6】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130020633 A
- KR 20130009687 A